(19) Europäisches Patentamt
European Patent Office
Office européen des brevets

(11) **EP 3 948 167 B1**

(12) **EUROPEAN PATENT SPECIFICATION**

(45) Date of publication and mention
of the grant of the patent:
**05.07.2023 Bulletin 2023/27**

(21) Application number: **20714612.7**

(22) Date of filing: **30.03.2020**

(51) International Patent Classification (IPC):
**G01D 5/353** (2006.01)   **G01K 11/32** (2021.01)
**G01L 1/24** (2006.01)

(52) Cooperative Patent Classification (CPC):
**G01D 5/35364; G01K 11/32; G01K 11/322;
G01L 1/242**

(86) International application number:
**PCT/EP2020/058961**

(87) International publication number:
**WO 2020/193804 (01.10.2020 Gazette 2020/40)**

(54) **TRANSDUCER**

WANDLER

TRANSDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2019 IT 201900004679**

(43) Date of publication of application:
**09.02.2022 Bulletin 2022/06**

(73) Proprietor: **Università degli Studi della Campania
"Luigi Vanvitelli"
81100 Caserta (CE) (IT)**

(72) Inventors:
 • **OLIVARES, Lucio**
  **81100 Caserta (CE) (IT)**
 • **DE CRISTOFARO, Martina**
  **81100 Caserta (CE) (IT)**
 • **COSCETTA, Agnese**
  **81100 Caserta (CE) (IT)**
 • **D'ETTORE, Angelo**
  **81100 Caserta (CE) (IT)**
 • **MINUTOLO, Vincenzo**
  **81100 Caserta (CE) (IT)**

(74) Representative: **Pace Napoleone, Maria et al
De Simone & Partners S.r.l.
Via Vincenzo Bellini, 20
00198 Roma (IT)**

(56) References cited:
 CN-A- 106 896 211    GB-A- 2 408 329
 US-A1- 2012 222 487   US-A1- 2018 274 954
 US-A1- 2019 016 065

 • **CRUNELLE C ET AL: "Original interrogation
  system for quasi-distributed FBG-based
  temperature sensor with fast demodulation
  technique", SENSORS AND ACTUATORS A:
  PHYSICAL, ELSEVIER BV, NL, vol. 150, no. 2, 25
  March 2009 (2009-03-25), pages 192-198,
  XP026005922, ISSN: 0924-4247, DOI:
  10.1016/J.SNA.2008.11.018 [retrieved on
  2008-11-30]**
 • **YANG C Q ET AL: "Linear strain sensing
  performance of continuous high strength carbon
  fibre reinforced polymer composites",
  COMPOSITES PART B, ELSEVIER,
  AMSTERDAM, NL, vol. 102, 25 July 2016
  (2016-07-25), pages 86-93, XP029694893, ISSN:
  1359-8368, DOI:
  10.1016/J.COMPOSITESB.2016.07.013**
 • **YI BAO ET AL: "Temperature measurement and
  damage detection in concrete beams exposed to
  fire using PPP-BOTDA based fiber optic
  sensors", SMART MATERIALS AND
  STRUCTURES, IOP PUBLISHING LTD., BRISTOL,
  GB, vol. 26, no. 10, 18 September 2017
  (2017-09-18), page 105034, XP020320034, ISSN:
  0964-1726, DOI: 10.1088/1361-665X/AA89A9
  [retrieved on 2017-09-18]**

EP 3 948 167 B1

**Description**

The present invention concerns a transducer, in particular for the detection of strains and/or temperature variations in engineering works and/or terrestrial zones, e.g. a slope.

An increasing number of engineering works are seriously threatened by a combination of negative factors linked to natural disasters (e.g. landslides or earthquakes, etc.) or to man-made causes (such as traffic-induced vibrations, degradation in structures, or the lack of maintenance, etc.). This problem is particularly acute in countries with outdated infrastructure and historically, artistically, or culturally important historic centres.

In this context, therefore, it is essential to develop Early Warning systems (so-called "EWS") to promptly detect whether a potentially dangerous or harmful event has occurred to a work or in a certain zone, in order to then define an appropriate structural reinforcement operation [1, 2, 3, 4].

To this end, numerous analyses based on the use of SHM-type point sensors (i.e. for structural monitoring) have been presented in the literature, such as ultrasonic tests [21, 22], thermography [23, 24], and static strain and dynamic vibration measurements [25, 26]. In particular, strain gauges and/or accelerometers [27] or laser sensors, Dopplers, or multicore optical fiber gratings [28, 29, 30] are generally used for this purpose. The main drawback that emerges from almost all of this work concerns the damage to the sensor during the experiment [31, 32, 33, 34, 35]. Barrias and Bao [36, 37] correctly describe the evolution of SHM sensors, highlighting, in particular, the limitations of using conventional sensors.

The above-mentioned sensors can, conveniently, be incorporated into various types of structures: reinforced concrete walls, bridges with pre-stressed concrete structures [38], wind turbines [39], FCS structures [40], and vibration detection applications [41, 42, 43] in reinforced concrete and/or pre-stressed concrete (PSC) works [44, 45].

Distributed strain and temperature measurement techniques using a common optical fiber as a sensor for communication have already been proposed. In particular, a consolidated technique currently available is based on optical time-domain analysis (Brillouin Optical Time-Domain Analysis, also called "BOTDA") [5], with an acquisition system that makes it possible to measure temperature and strain (20-microstrain resolution) along the fiber with a spatial resolution in the order of centimetres and with acquisition times in the order of minutes.

These distributed strain measurements can be carried out along slopes (natural and artificial), along linear infrastructure (even over long distances), and are very advantageous compared with conventional point measurements (topographic, inclinometer, and strain gauges, etc.) that only provide local information and are not able to keep physical phenomena under observation.

In particular, various systems using optical fiber as a strain sensor in the geotechnical field have already been proposed. Iten and Puzrin [7] used optical fiber on natural slopes to locate the landslide area. In addition, monitoring systems using optical fiber sensors in earth dams [8, 9] and other applications with geosynthetics and reinforced earth have been used in small-scale slope models [10, 11].

Additionally, optical fibers were used for measuring movement profiles in inclinometer tubes [12, 13]. One of the first applications was carried out in an embankment where the optical fibers were glued directly to the outer surface of the inclinometer pipes [14]. However, the technical problems that arose during the experiment (fiber breakage and fiber-pipe interface slippage, etc.) mean that this application is only prototypical, with only qualitative results.

Currently, most applications involving the use of optical fiber as a sensor are based on fiber Bragg gratings (FBG) [15, 16, 17]. However, with this technique, only a small portion of the optical fiber defines the sensor. In particular, FBG sensors - which are connected together and bonded to the surface of a plastic rod to measure axial strains and stresses - give precise information along the inclinometer pipes, thus losing the advantage of having the continuous information that you have with distributed sensors. In the case of landslides, the sliding surface is located in a very narrow shear band that is, therefore, difficult to identify with point sensors.

Further work on the use of optical fiber sensors for landslide monitoring using physical modelling has highlighted the main problems and difficulties encountered in current systems: the interaction between the sensor (i.e. optical fiber) and the system to which it is paired [18, 19, 20]. In particular, in most of the known applications, the optical fiber sensor is simply embedded in the ground, thus causing poor transmission of the stresses between the ground and the sensor itself; this is due to the fact that the two materials that are in contact have totally different mechanical stiffnesses and strengths. In addition, under natural environmental conditions, the sensor suffers damage.

Basically, all conventional sensors have problems with coupling between the optical fiber and the relative support that is coupled to the system, the possible strain of which is to be detected, problems that also inevitably entail unwanted measurement errors.

In addition to slopes and landslides, civil structures and infrastructure can also be conveniently monitored with distributed strain transducers. In particular, these transducers can be used in civil structures for the continuous monitoring thereof in order to identify when it is necessary to carry out reinforcement operations. In particular, in this way, the safety assessment parameters of the structures are permanently monitored in order to predict accidental collapse and breakage. Appropriately, distributed sensors have the advantage of observing entire parts of the structure wherein critical events can occur, such as the opening of fissures or cracks, or the failure of fasteners and joints. In addition, by integrating the strains along the instrumented part, it is possible to trace the movement profile, thus allowing an assessment of the occurrence of degradation phenomena.

US 2019/016065 A1 describes a composite material packaged fiber grating sensor including a fiber grating sensor component, a composite material coverage layer, a resin package layer and a composite material substrate layer. In the sensor, a temperature fiber grating and a strain fiber grating are packaged in a composite material structure. In particular, this document describes a grating optical sensor directly linked on the structure under monitoring. The sensor is protected by gluing between composite materials resulting into a pointwise sensor able to measure only discrete quantities.

The purpose of the invention is to propose a transducer that makes it possible to overcome the drawbacks of conventional solutions.

Another purpose of the invention is to propose a transducer for monitoring the state of an engineering work or of a terrestrial zone along a large part, or all, of its extension, even for tracts of hundreds of meters.

Another purpose of the invention is to propose a transducer that enables continuous monitoring of the state of an engineering work and/or a terrestrial zone.

Another purpose of the invention is to propose a transducer that enables the detection and measurement of mechanical strains.

Another purpose of the invention is to propose a transducer that enables the detection and measurement of thermal variations.

Another purpose of the invention is to propose a transducer that enables the detection of strains and/or temperature variations with high spatial resolution.

Another purpose of the invention is to propose a transducer that can be used as a measuring instrument in case of structural strengthening.

Another purpose of the invention is to propose a transducer that enables real-time monitoring of the state of an engineering work and/or a terrestrial zone.

Another purpose of the invention is to propose a transducer that can be applied and integrated in various engineering works and/or terrestrial zones, even of different types.

Another purpose of the invention is to propose a transducer that is durable and resistant, especially to chemical degradation.

Another purpose of the invention is to propose a transducer that enables an effective and durable pairing with the engineering work and/or the terrestrial zone wherein/to which it is applied.

Another purpose of the invention is to propose a transducer that enables the early identification of the development of strain phenomena in order to prevent the occurrence of critical events.

Another purpose of the invention is to propose a transducer with alternative and/or improved features compared to conventional solutions.

Another purpose of the invention is to propose a transducer that can be produced and installed in a simple, quick, and low cost way.

All these purposes, either individually or in any combination thereof, and others contained in the description below are achieved, according to the invention, with a transducer according to claim 1.

The present invention is further clarified below in some of its preferred embodiments that are described merely by way of non-limiting example and with reference to the attached figures, wherein:

Figure 1　shows the transducer in perspective view according to the invention in a first embodiment,
Figure 2　shows the embodiment in Fig. 1 in vertical cross-section,
Figure 3　shows the embodiment in Fig. 1 in horizontal cross-section,
Figure 4　shows the transducer in perspective view according to the invention in a second embodiment,
Figure 5　shows the embodiment in Fig. 4 in vertical cross-section,
Figure 6　shows the embodiment in Fig. 4 in horizontal cross-section,
Figure 7　shows the transducer in perspective view according to the invention in a third embodiment,
Figure 8　shows the embodiment in Fig. 7 in vertical cross-section,
Figure 9　shows the embodiment in Fig. 7 in horizontal cross-section,
Figure 10　shows the set-up of a GG transducer coupled to a vertical cylinder inclinometer (a) and the set-up of a CG transducer coupled to a cylinder inclinometer (b),
Figure 11　shows the strain measurements obtained using a GG transducer according to the set-up of Fig. 10a,
Figure 12　shows the strain measurements obtained using a CG transducer according to the set-up of Fig. 10b,
Figure 13　shows an origin calibration system,
Figure 14　shows the set-up of a GG transducer coupled to a horizontal cylinder inclinometer.
Figure 15　shows the strain measurements obtained using a GG transducer according to the set-up of Fig. 14.

As can be seen from the figures, the transducer according to the invention globally denoted with reference number 1 - in particular for the detection of strains and/or temperature variations in engineering works and/or terrestrial zones, e.g. a slope - comprises at least one distributed optical fiber sensor 2 based on Brillouin scattering.

According to the invention, for at least a part 22 of its longitudinal extension, the optical fiber 2 of said sensor is housed inside a containment structure 20 having mechanical stiffness features substantially corresponding to those of the optical fiber, i.e. the mechanical stiffness characteristics of the coating layers and of the optical fiber (2) are the same or substantially the same. In other words, the constitutive moduli of the materials making the optical fibers and the coating layers are numerically almost the same, hence the mechanical behavior of the transducer as a whole does not present singularity, anomalous stress concentration, and lack of strain transfer from the element to be measured and the transducer.

The containment structure 20, and the corresponding part 22 of optical fiber housed inside said structure, are conveniently integrated with the engineering work and/or the terrestrial zone (hereinafter also referred to as the "system") of which, and along which, the detection of strains and/or variations in temperature is required.

The transducer 1 conveniently comprises and/or is integrated with at least one light source, preferably a laser, that is configured to emit at least one light radiation. Said at least one light source is preferably positioned at one end of the optical fiber 2. Two light sources, each positioned at one end of optical fiber 2, could also, conveniently, be provided. The first light source (the so-called pump) is advantageously configured to emit pulsed light, while the second light source (the so-called probe) is configured to emit continuous light.

The transducer 1 conveniently comprises and/or is integrated with at least one detector (e.g. a photodetector) that, preferably, consists of an analysis apparatus for analysing the spectrum of light radiation that has been emitted by said at least one source and that has been propagated inside the optical fiber 2. Said at least one analysis apparatus can preferably be configured to carry out time-resolved Raman spectroscopy (TR-RS) measurements.

The optical fiber sensor 2 of the transducer 1 is, conveniently, of the distributed type, thus enabling the detection of strains and/or temperature variations - preferably in a continuous or substantially continuous way - along the whole installation axis of said optical fiber 2 to said system, i.e. it is not a point type.

The optical fiber 2 is, conveniently, a conventional type, thus enabling an advantageous containment of costs due to the economy of scale made possible by the use of a component - such as optical fiber - that is widely used in the telecommunications field.

The optical fiber 2 preferably comprises a part wherein it is folded substantially in a "U" shape, so as to return in the starting direction and, thus, to define an outgoing part 2' and a return part 2". The U shape allows to satisfy two requirements, namely the first is to have a double set of measures along almost the same direction that can be averaged to minimize some accidental local error of measure, the second is that it makes possible to pose the start and the end of the fiber at the same end of the transducer where the connector to the acquisition electronic device must be set.

As said, the optical fiber sensor 2 of the transducer 1 according to the invention is conveniently based on the phenomenon of Brillouin scattering, i.e. the phenomenon that is generated as a result of the interaction between light waves and a acoustic wave. In particular, this phenomenon demonstrates that when the light radiation is reflected by the walls of the optical fiber, a combination of the energy of the incident photon ($E_{incident\ photon}$) and the energy ($E_{excitation}$) of a vibration mode (i.e. the energy associated with a vibration of the reflecting surface, which may be due to a mechanical shift or a thermal vibration), which modifies the energy of the outgoing photon ($E_{outgoing\ photon}$), may occur according to the equation:

$$E_{outgoing\ photon} = E_{incident\ photon} \pm E_{excitation}$$

where the presence of the "$\pm$" operators is due to the possibility, for the photon, of absorbing (and, therefore, detecting) the energy of a fiber vibration (and, therefore, the sign "+"), or of provoking a vibration of the fiber itself (and, therefore, giving up a part of its energy, the sign "-").

Therefore, by measuring the energy of the photons exiting the optical fiber 2, information is, conveniently, obtained on the vibrations that occur inside the optical fiber itself or that are transmitted to it. In fact, when the optical fiber 2 is coupled to the external system, the vibrations of said system (caused by a mechanical strain and/or by a thermal variation of the latter) propagate to the fiber itself, and, therefore, it becomes possible to measure the vibrations of the whole system.

Brillouin scattering conveniently focuses on low-energy vibrations (a few hundred meV) resulting from long-range expansion (or contraction) phenomena. For this reason, this technique is particularly suitable for the study of structural strains of even particularly extensive systems, such as buildings, landslides, or large pipelines (oil pipelines, gas pipelines, or water-supply systems). In addition, this technique is also effective in verifying thermal variations, which can cause expansions or contractions of the grating of the optical fiber 2.

Accordingly, the present invention provides a method for detecting strains and/or temperature variations in engineering works and/or terrestrial zones employing the transducer 1 according to one or more embodiments described. In particular, the method comprises coupling a first end of the optical fiber 2 with a first light source, measuring the energy of the photons associated to the first light source exiting the optical fiber 2, and determining information obtained on the vibrations occurring inside the optical fiber 2 itself or that are transmitted to it.

Advantageously, the method further comprises coupling a second end of the optical fiber 2 with a second light source, wherein the first light source emits pulsed light and the second light source emits continuous light.

In the transducer 1 according to the invention, the containment structure 20 wherein said at least one longitudinal part 22 of the optical fiber 2 is housed comprises:

- an intermediate layer 21 wherein the part 22 of said fiber 2 is completely housed and contained - preferably immersed - and
- a pair of coating layers of coating 6, 6' covering above and below said intermediate layer 21.

In particular, in said containment structure 20, the above-mentioned part 22 of optical fiber 2 is completely/entirely immersed in the intermediate layer 21 and is sandwiched between the two coating layers 6 and 6'.

Advantageously, the intermediate layer 21 containing a longitudinal part 22 of the optical fiber 2 and that is defined between the two coating layers 6, 6' is filled with a material that is compatible with carbon fibers and/or glass fibers. Appropriately, this material is suitable for making the containment structure 20 more stiff and, at the same time, guarantees an appropriate mechanical and chemical protection of the optical fiber 2. The filling material of the intermediate layer 21 may preferably comprise polyester resins or other polymeric materials.

The coating layers 6 and 6' have mechanical stiffness features that substantially correspond to those of the optical fiber 2.

Appropriately, the two coating layers 6, 6' are configured (in particular sized) so as to enclose a longitudinal part 22 of the optical fiber 2 between them, which is folded substantially so as to define a "U"-shaped route wherein, preferably, the outgoing part 2' and the return part 2" sit alongside each other and are parallel.

Appropriately, the width "L" of each coating layer 6 and 6' is greater than the reciprocal distance "s" between the outgoing part 2' and the return part 2". With a reciprocal distance "s" of some centimeters between the outgoing part 2' and the return part 2", the width "L" of each layer 6 and 6' is, preferably, about 3 - 7 cm, preferably about 5 cm.

Conveniently, the two coating layers 6 and 6' have the task of instilling the optical fiber 2 with mechanical strength, thus improving the durability of the transducer 1. In addition, said coating layers 6 and 6' also enable the protection of the optical fiber 2 of the transducer itself from external agents (e.g. weather conditions if the transducer is exposed to the outside, or agents present inside the system wherein the transducer may have been embedded) that could cause undesirable deterioration thereto.

Conveniently, the two coating layers 6, 6' can be held together, by clamping the intermediate layer 21 containing the optical fiber 2, using at least a fastener, for example two suitable fasteners 10, such as screws or interlocking elements.

Conveniently, the mutual distance "d" between the fasteners 10 along the longitudinal extension of each coating layer 6 or 6' is about 30-70 cm, preferably about 50 cm.

Conveniently, the entire cross-section (of the longitudinal part 22 of optical fiber 2) is embedded/immersed/inserted inside the intermediate layer 21 of the containment structure 20.

Conveniently, the longitudinal extension of the part 22 of optical fiber 2 that is housed/equipped with said containment structure 20 substantially corresponds to the extension of the portion of the system the strains and/or temperature variations of which are to be detected/monitored.

Conveniently, therefore, the longitudinal extension of said containment structure 20 substantially corresponds to the extension of the portion of the system the strains and/or temperature variations of which are to be detected/monitored. The longitudinal part 22 of said optical fiber 2 is advantageously integrated with the portion of the system to be monitored using the containment structure 20 within which it is housed.

The longitudinal part 22 of the optical fiber 2 that is housed inside the containment structure 20 preferably comprises substantially the entire longitudinal extension of the fiber itself except for those parts wherein said optical fiber is connected to the light source and to the analysis apparatus.

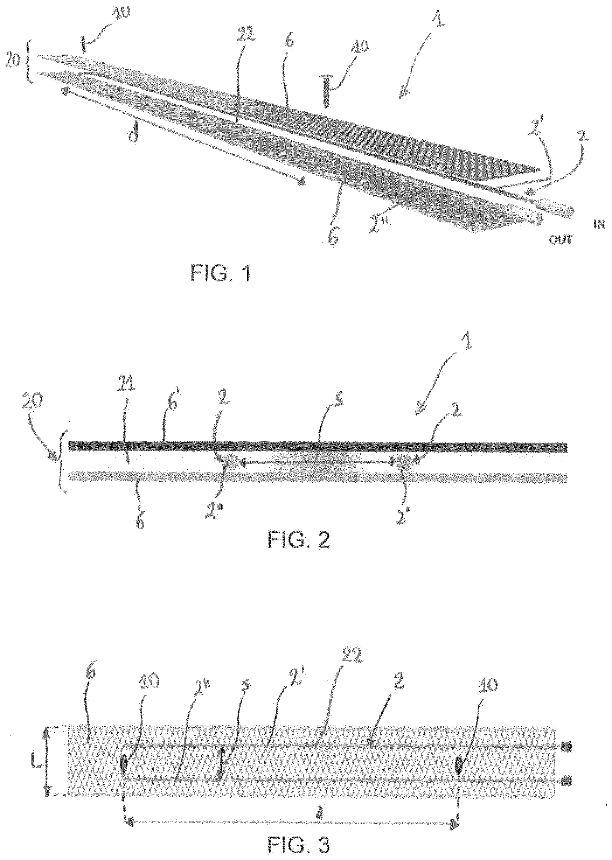

In a first embodiment (see Figures 1 - 3) of the transducer 1, a coating layer 6, and preferably the lower layer, is composed of a glass fiber fabric, while the second layer 6', and preferably the upper layer, is composed of a unidirectional carbon fiber fabric, preferably along the longitudinal extension axis of the optical fiber 2.

The glass fiber fabric of the first layer 6 has, preferably, a grammage of about $200g/m^2$. The unidirectional carbon fiber fabric of the second layer 6' has, preferably, a grammage of about $200g/m^2$.

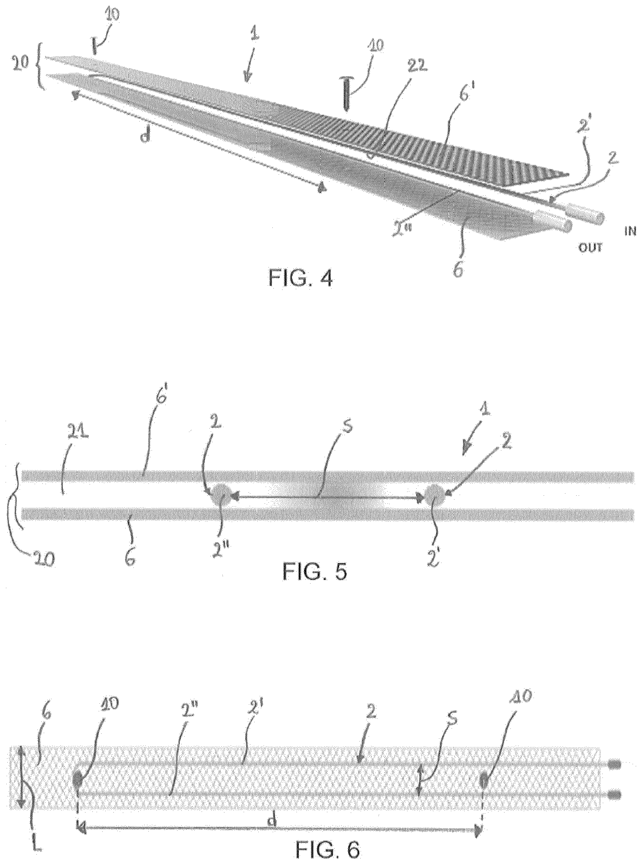

In a second embodiment (see Figures 4-6) both layers 6, 6' are made of glass fiber fabric, preferably with a grammage of $200g/m^2$. This embodiment advantageously enables the flexibility of the containment structure 20 to be increased, without degrading the mechanical strength thereof for this reason.

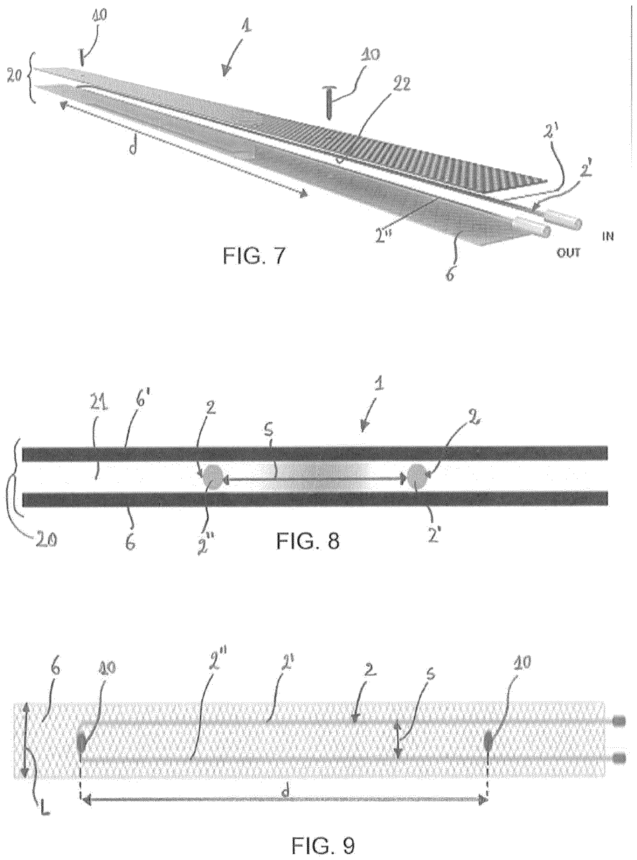

In a third embodiment (see Figures 7-9) both layers 6, 6' are made of unidirectional carbon fiber fabric, preferably with a grammage of $200g/m^2$. The glass fibers of the two layers 6, 6' are preferably oriented along the longitudinal extension axis of the optical fiber 2. This embodiment instils the containment structure 20 with a high degree of stiffness and mechanical strength.

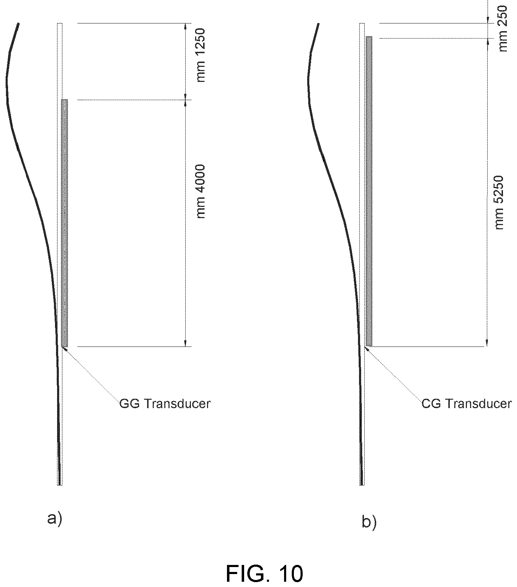

Figure 10 describes a possible experimental setup employing the transducer 1 according to the preceding embodiments.

The developed experiments consisted in two kinds of testing setups shown in figure 10 (a) and figure 10(b), respectively.

According to an instrumented vertical inclinometer, the tested specimen consists of an inclinometer pipe equipped with displacement transducers. The inclinometer pipe consists of three segments joined to form the whole cylinder. The pipe has been instrumented with two kind of the proposed optical fibers based transducers 1. The transducers 1 are fastened to the cylinder along its generatrix. The two kinds of transducers 1 depends on the technique adopted for building the transducer support and the optical fibers 2 employed for the transducer setup, i.e. Glass-glass (GG) transducer consisting of a dual layer, mat220 fiberglass polyester composite with immersed G.652 single mode optical fibers (ITU-T standard fibers), wherein the optical fiber 2 represents the actual sensor and Carbon-glass (CG) transducer consisting of a dual layer, one biaxial 200 carbon fiber composite and two mat100 fiberglass polyester composite with immersed G.657 single mode optical fibers. The ITU- standard G.657 fiber is designed in order to preserve better signal even in the presence of higher curvature of the fiber path.

Both the transducers are glued to the inclinometer by means of bi-component epoxy resin ADEKIT 140 by Axon.

The setup of the testing is represented in Figure 10, wherein the inclinometer cylinder is drawn schematically as a one-dimensional beam subjected to prescribed boundary displacements. The cylinder dimensional characteristics are summarized in table 1.

**Table 1. cylinder dimensional characteristics**

| Transducer | Length [mm] | Instrumented Length [mm] | Radius [mm] | Thickness [mm] |
|:---:|:---:|:---:|:---:|:---:|
| GG | 7500 | 4000 | 80 | 3 |
| CG | 7500 | 5250 | 80 | 3 |

In order to compare the inclinometer measurements with the transducers' ones, the former are converted into strains by numerical derivation of the acquired displacement data. The inclinometer, indeed, furnishes displacement measures that need to be elaborated to convert into strain by means of derivation with respect to the length coordinate.

It has to be highlighted that the measured strain using the CG and the GG transducers have been acquired accordingly to two different setups, namely the first setup concerned CG transducer, the transducer is fastened to the cylinder starting at the depth of $d_1 = 250mm$ (see Figure 10 a), the second set up, concerning the CG transducer considers the application of the transducer at the depth of $d_2 = 1250mm$ (see Figure 10 b).

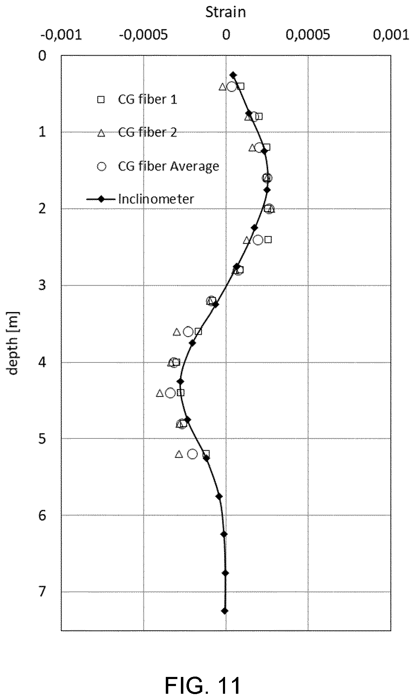

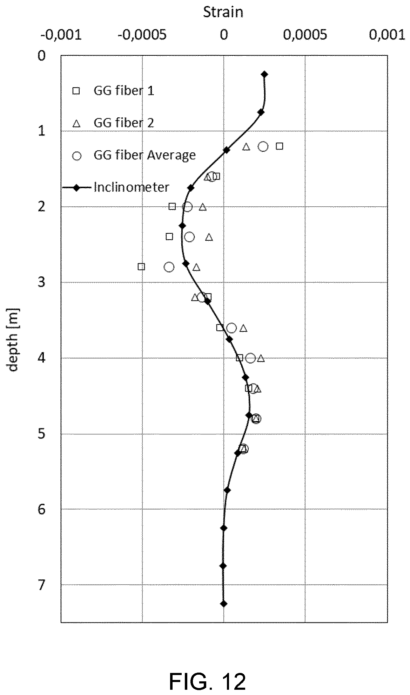

Figures 11 and 12 illustrate the strain measurements obtained using CG and GG transducers, respectively. The results are compared with the strain arising from derivative of the displacement obtained by the inclinometer cylinder. In the figures the transducers measurements refer to two pickup phases, addressed as fiber 1 and fiber 2 respectively. Subsequently the two measurements are averaged resulting into the fiber average data set. Also, in the diagram is illustrated the strain obtained by the inclinometer displacement measurement. It can be seen that the fiber average does not differ significantly from the inclinometer calculated strain for both the transducers setups.

By comparing figures 11 and 12, the strain obtained using the CG transducer shows fewer errors due to the quality of the used fiber and to the transducer building technique with respect to GG transducer. The GG transducer, indeed, is realized with G.652 fiber that is subjected to greater loss of signal in the presence of relatively high curvatures. The CG transducer is made of G.657 fiber presenting a reduced loss of signal in the presence of curvatures of the fiber. Moreover, in the manufacturing process of GG transducer occurred some little but not negligible localized curvatures of the fiber.

Henceforth, the figures 11 and 12 allow recognizing that the CG transducer, equipped with ITU G.657 fiber, furnishes a better strain map than the GG transducer equipped with G.652 fiber.

According to an instrumented horizontal inclinometer, the tested specimen consisted of an inclinometer casing tube equipped with displacement transducers. The inclinometer casing tube consists of three segments joined to form the whole cylinder. The pipe has been instrumented with the proposed optical fibers based transducers 1. The transducer 1 is fastened to the cylinder along its generatrix. As regards the setup, a Glass-glass transducer (GG) is employed consisting of a dual layer, mat220 fiberglass polyester composite with immersed G.652 single mode optical fibres (ITU-T standard fibers). The optical fiber 2 represents the actual sensor. The transducer 1 is glued to the inclinometer by means of bi-component epoxy resin ADEKIT 140 by Axon.

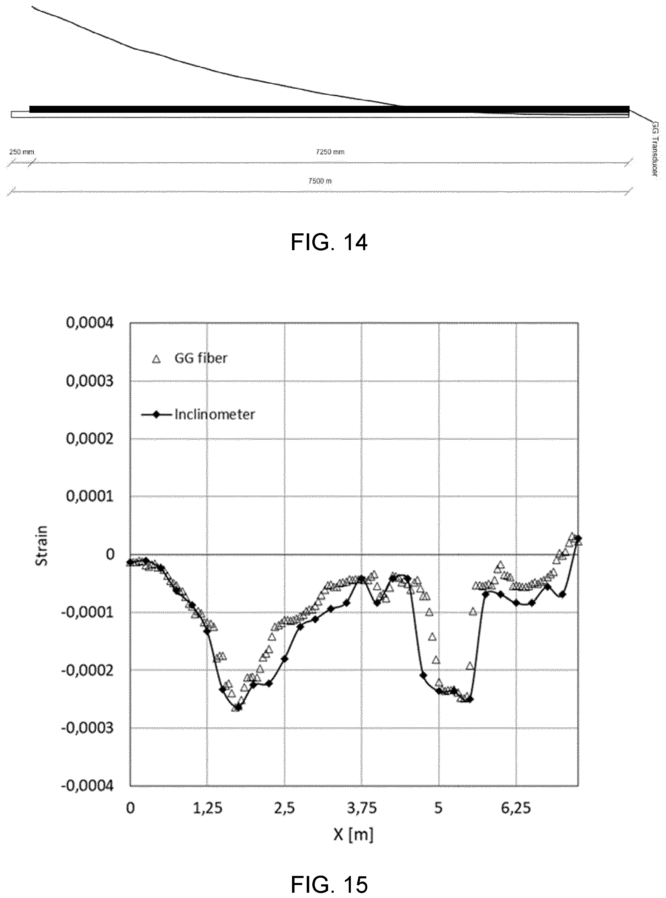

The setup of the testing is represented in Figure 14, wherein the inclinometer cylinder is schematically illustrated as a one-dimensional beam subjected to prescribed boundary displacements. The cylinder dimensional characteristics are summarized in table 2.

**Table 2. cylinder dimensional characteristics**

| Transducer | Length [mm] | Instrumented Length [mm] | Radius [mm] | Thickness [mm] |
|---|---|---|---|---|
| GG | 7500 | 4000 | 80 | 3 |

In order to compare the inclinometer measurements with the transducers' ones, the former are converted into strains by numerical derivation of the acquired displacement data. The inclinometer, indeed, furnishes displacement measurements that have to be elaborated to convert into strain by means of derivation with respect to the length coordinate.

It is noted that the measured strain using the GG transducer is acquired accordingly to this setup, wherein the transducer 1 is fastened to the cylinder starting at a distance X = 250mm (see Figure 14).

Figure 15 shows the strain measurements obtained using GG transducer compared with the strain arising from derivative of the displacement obtained by the inclinometer measurements. Furthermore, the figure shows the strain obtained by the inclinometer displacement measurement. It is noted that the fiber average does not significantly differ from the inclinometer calculated strain for the transducer setup.

The GG transducer, indeed, is realized with G.652 fiber that is subjected to greater loss of signal in the presence of relatively high curvatures. Moreover, in the manufacturing process of GG transducer occurred some little but not negligible localized curvatures of the fiber.

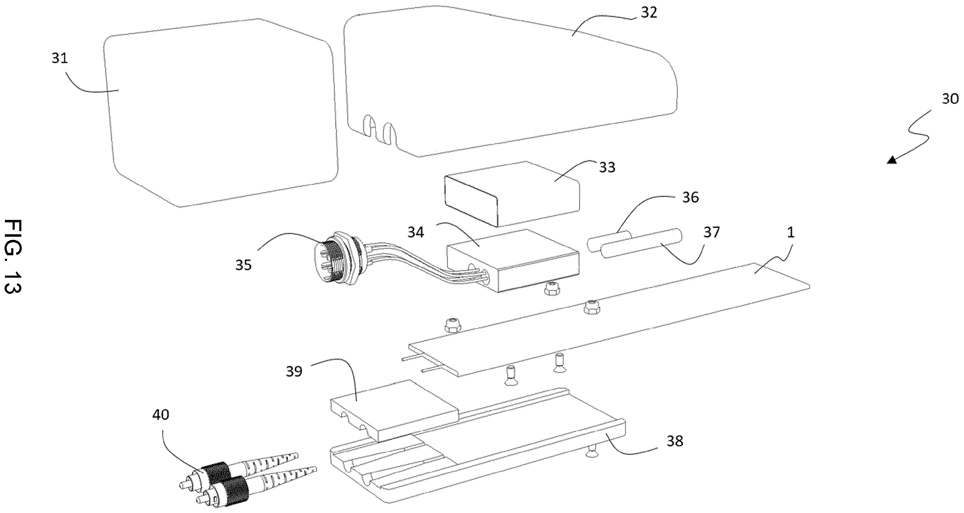

Figure 13 shows a origin calibration system 30 for connectors and transducer.

Often, during the strain measurements through optical fibers based distributed sensors, one of the uncertainties of the measure calibration is the exact knowledge of the position of the fibers points along the tested structure. The fibers system is, indeed, able to get the measure at known point. What is almost difficult is coupling the position along the fiber to the position along the structure since the difficulty of recognizing the actual point of the conjunction of fibers and structure. To overcome such a drawback the transducer can be equipped with a coupled connection device that contains a temperature based origin calibration tool.

As shown in figure 13, the system 30 comprises a nylon connectors' cover 31, a nylon carter 32, a thermal insulator in Kapton 33, a brass block 34, a four pin connector 35, a heating cartridge 36, a temperature sensor 37, a NHST transducer 1, a fastener system for optical fibers connectors 39, a support strut in laminated composite 38 and optical fibers connectors 40.

The connectors system allows joining the transducer 1 to the acquiring electronic unit, moreover the system 30 comprises an heating cartridge 36 that allows applying a temperature increase at the starting point of the fibers. The temperature is kept at 60-70°C during the calibration, when an acquisition is made on the fiber sensor in initial configuration (undeformed).

The temperature space impulse produces a local peak of the strain measure that allows identifying the position of the transducer 1 along with the structure. Further measurements can be done after the temperature has vanished. In this way it is possible achieve the desired actual measurement of strain avoiding the indeterminacy of the position of the measuring point along the structure.

The containment structure 20 of the transducer 1 according to the invention can conveniently be applied in the conventional way to an extended wall of an engineering work and/or a terrestrial zone the strain and/or thermal variations of which are to be detected and/or monitored over time.

It is pointed out that the transducer 1 according to the invention is made in factory. Accordingly, it is possible to produce hundred meters long element and it is easy to be transported. The dimensions, namely thickness and width of the transducer 1, are designed to obtain the best mechanical resistance during for example the wrapping in coils of 2 meters diameter, stocking and transportation. This avoids undesired sliding between the substrate and the optical fiber sensor that could compromise the sensor integrity and the effectiveness of the measuring process (as it happens when the sensor is embedded into protection jackets presenting much more lower or higher toughness, stiffness and strength). Moreover, the transducer 1 is designed to allow easy fixing on the structures. To this purpose, it is equipped with a first fastener device at the interval of about half a meter. By means of such a fastener, the transducer 1 is firstly secured to the structure under monitoring before being embedded into a reinforcing system made of composite reinforcement elements. In such a manner the transducer 1 is an evolution of the classical SHM device (even the Brillouin based classical optical fiber sensors) since the proposed transducer 1 behaves at the same time as a sensor and as a reinforcement.

The proposed transducer 1 integrated in monitor systems, by removing many implicit limitations of the conventional monitoring systems, becomes essential to develop innovative Early Warning Systems (EWS) for geotechnical application and "Structural Health Monitoring and Restoration" (SHMR) which is an effective enhancement of simple "Structural Health Monitoring" (SHM) as it is intended till now.

It is clear from what has been said that the transducer according to the invention is more advantageous than conventional solutions because:

- the optical fiber is protected by a very strong composite material coating and, therefore, is appropriately protected and does not suffer mechanical or chemical degradation over time,
- it is of the distributed type and enables, with high spatial resolution, the reconstruction of the thermal and/or strain profile of a particularly large portion of an engineering work and/or of a terrestrial zone, even reaching tracts of hundreds of meters,
- it can be used both for monitoring landslides and for monitoring and structural reinforcement; in particular, it enables the identification, in times compatible with the definition of an "Early Warning" system, of the vertical reactivation of pre-existing sliding surfaces and the position of newly formed sliding surfaces.

The present innovation has been illustrated in some of its preferred embodiments, but it should be understood that practical variants may, in practice, be made to them, without departing from the scope of protection of the present invention.

Bibliography

[1] H.-H. Zhu, B. Shi, J. Zhang, J.-F. Yan and C.-C. Zhang, "Distributed fiber optic monitoring and stability analysis of a model slope under surcharge loading," Journal of Mountain Science, vol. 11, n. 4, pp. 979-989, 10 7 2014.

[2] L. Zeni, L. Picarelli, B. Avolio, A. Coscetta, R. Papa, G. Zeni, C. Di Maio, R. Vassallo and A. Minardo, "Brillouin optical time-domain analysis for geotechnical monitoring," Journal of Rock Mechanics and Geotechnical Engineering, vol. 7, n. 4, pp. 458-462, 8 2015.

[3] P. S. Westbrook, T. Kremp, K. S. Feder, W. Ko, E. M. Monberg, H. Wu, D. A. Simoff, T. F. Taunay and R. M. Ortiz, "Continuous Multicore Optical Fiber Grating Arrays for Distributed Sensing Applications," Journal of Lightwave Technology, vol. 35, n. 6, pp. 1248-1252, 15 3 2017.

[4] Y. Wang, B. Jin, Y. Wang, D. Wang, X. Liu and Q. Dong, "Distributed fiber-optic vibration detection system," in 2016 13th International Conference on Ubiquitous Robots and Ambient Intelligence (URAI), 2016.

[5] G. Uva, F. Porco, A. Fiore and G. Porco, "Structural monitoring using fiber optic sensors of a pre-stressed concrete viaduct during construction phases," Case Studies in Nondestructive Testing and Evaluation, vol. 2, pp. 27-37, 10 2014.

[6] R. Usamentiaga, P. Venegas, J. Guerediaga, L. Vega and I. López, "Automatic detection of impact damage in carbon fiber composites using active thermography," Infrared Physics & Technology, vol. 58, pp. 36-46, 5 2013.

[7] I. Trendafilova, M. Cartmell and W. Ostachowicz, "Vibration-based damage detection in an aircraft wing scaled model using principal component analysis and pattern recognition," Journal of Sound and Vibration, vol. 313, n. 3-5, pp. 560-566, 6 2008.

[8] Y. Stern, Y. London, E. Prefer, Y. Antman, H. Diamandi, M. Silbiger, G. Adler, E. Levenberg, D. Shalev and A. Zadok, "Brillouin Optical Correlation Domain Analysis in Composite Material Beams," Sensors, vol. 17, n. 10, p. 2266, 2 10 2017.

[9] K. Smarsly, K. Lehner and D. Hartmann, "Structural Health Monitoring based on Artificial Intelligence Techniques," in Computing in Civil Engineering (2007), Reston, VA, 2007.

[10] B. Shi, H. Sui, J. Liu and D. Zhang, "The BOTDR-based distributed monitoring system for slope engineering," in IAEG 2006, Nottingham, UK, 2006.

[11] L. Schenato, L. Palmieri, M. Camporese, S. Bersan, S. Cola, A. Pasuto, A. Galtarossa, P. Salandin and P.

Simonini, "Distributed optical fiber sensing for early detection of shallow landslides triggering," Scientific Reports, vol. 7, n. 1, p. 14686, 31 12 2017.

[12] E. Ruocco and V. Minutolo, "Buckling Analysis of Mindlin Plates Under the Green-Lagrange Strain Hypothesis," International Journal of Structural Stability and Dynamics, vol. 15, n. 06, p. 1450079, 8 2015.

[13] G. Rodriguez, J. R. Casas and S. Villaba, "Cracking assessment in concrete structures by distributed optical fiber," Smart Materials and Structures, vol. 24, n. 3, p. 035005, 1 3 2015.

[14] J. Reilly, S. Dashti, M. Ervasti, J. D. Bray, S. D. Glaser and A. M. Bayen, "Mobile Phones as Seismologic Sensors: Automating Data Extraction for the iShake System," IEEE Transactions on Automation Science and Engineering, vol. 10, n. 2, pp. 242-251, 4 2013.

[15] C. Ratcliffe, D. Heider, R. Crane, C. Krauthauser, M. K. Yoon and J. W. Gillespie, "Investigation into the use of low cost MEMS accelerometers for vibration based damage detection," Composite Structures, 2008.

[16] U. Polimeno and M. Meo, "Detecting barely visible impact damage detection on aircraft composites structures," Composite Structures, vol. 91, n. 4, pp. 398-402, 12 2009.

[17] H. Pei, P. Cui, J. Yin, H. Zhu, X. Chen, L. Pei and D. Xu, "Monitoring and warning of landslides and debris flows using an optical fiber sensor technology," Journal of Mountain Science, Vol. 8, No. 5, pp. 728-738, 17 10 2011.

[18] H. Pei, J. Yin, H. Zhu and C. Hong, "Development and Application of an Optical Fiber Sensor Based In-Place Inclinometer for Geotechnical Monitoring," in Geo-Frontiers 2011, Reston, VA, 2011.

[19] Optosensing, "Apparato per la misura di profilo di shift brillouin in fibra ottica basato sull'acquisizione in tempo reale del segnale differenziale" [Apparatus for measuring the Brillouin shift profile in optical fiber based on the real-time acquisition of the differential signal]. 2016.

[20] L. Olivares, E. Damiano, P. Mercogliano, L. Picarelli, N. Netti, P. Schiano, V. Savastano, F. Cotroneo and M. P. Manzi, "A simulation chain for early prediction of rainfall-induced landslides," Landslides, vol. 11, n. 5, pp. 765-777, 26 10 2014.

[21] F. Moser, W. Lienhart, H. Woschitz and H. Schuller, "Long-term monitoring of reinforced earth structures using distributed fiber optic sensing," Journal of Civil Structural Health Monitoring, vol. 6, n. 3, pp. 321-327, 4 7 2016.

[22] T. Loutas, A. Panopoulou, D. Roulias and V. Kostopoulos, "Intelligent health monitoring of aerospace composite structures based on dynamic strain measurements," Expert Systems with Applications, vol. 39, n. 9, pp. 8412-8422, 7 2012.

[23] K. M. Lee and V. R. Manjunath, "Experimental and numerical studies of geosynthetic-reinforced sand slopes loaded with a footing," Canadian Geotechnical Journal, vol. 37, n. 4, pp. 828-842, 8 2000.

[24] D. Kotsakos, P. Sakkos, V. Kalogeraki and D. Gunopulos, "Smartmonitor: Using smart devices to perform structural health monitoring," Proceedings of the VLDB Endowment, vol. 6, n. 12, pp. 1282-1285, 28 8 2013.

[25] Q. Kong, R. M. Allen, M. D. Kohler, T. H. Heaton and J. Bunn, "Structural Health Monitoring of Buildings Using Smartphone Sensors," Seismological Research Letters, vol. 89, n. 2A, pp. 594-602, 10 3 2018.

[26] A. Katunin, K. Dragan and M. Dziendzikowski, "Damage identification in aircraft composite structures: A case study using various non-destructive testing techniques," Composite Structures, vol. 127, pp. 1-9, 9 2015.

[27] M. Iten and A. M. Puzrin, "BOTDA road-embedded strain sensing system for landslide boundary localization," 2009.

[28] X. Huang, M. Yang, L. Feng, H. Gu, H. Su, X. Cui and W. Cao, "Crack detection study for hydraulic concrete using PPP-BOTDA," Smart Structures and Systems, vol. 20, n. 1, pp. 75-83, 2017.

[29] C.-Y. Hong, J.-H. Yin and Y.-F. Zhang, "Deformation monitoring of long GFRP bar soil nails using distributed optical fiber sensing technology," Smart Materials and Structures, vol. 25, n. 8, p. 085044, 1 8 2016.

[30] C. Guo, D. Chen, C. Shen, Y. Lu and H. Liu, "Optical inclinometer based on a tilted fiber Bragg grating with a fused taper," Optical Fiber Technology, vol. 24, pp. 30-33, 8 2015.

[31] B. Glisic, D. Hubbell, D. H. Sigurdardottir and Y. Yao, "Damage detection and characterization using long-gauge and distributed fiber optic sensors," *Optical Engineering,* vol. 52, n. 8, p. 087101, 1 8 2013.

[32] P. Gao, "The Application of Distributed Optical Fiber Sensing in Seepage Flow Monitoring System," International Journal of Digital Content Technology and its Applications, vol. 6, n. 12, pp. 175-181, 15 7 2012.

[33] I. Floris, S. Sales, P. A. Calderón and J. M. Adam, "Measurement uncertainty of multicore optical fiber sensors used to sense curvature and bending direction," Measurement, vol. 132, pp. 35-46, 1 2019.

[34] M. Farhadiroushan and S. Johansson, "Seepage and strain monitoring in embankment dams using distributed sensing in optical fibers-theoretical background and experiences from some installations in Sweden," in International Symposium on Dam Safety and Detection of Hidden Troubles, Xi'an, China, 2005.

[35] M. Fajkus, J. Nedoma, P. Mec, E. Hrubesova, R. Martinek and V. Vasinek, "Analysis of the highway tunnels monitoring using an optical fiber implemented into primary lining," Journal of Electrical Engineering, vol. 68, n. 5, pp. 364-370, 1 9 2017.

[36] P. Dragic and J. Ballato, "A Brief Review of Specialty Optical Fibers for Brillouin-Scattering-Based Distributed Sensors," Applied Sciences, vol. 8, n. 10, p. 1996, 20 10 2018.

[37] S. Dashti, J. D. Bray, J. Reilly, S. Glaser, A. Bayen and E. Mari, "Evaluating the Reliability of Phones as Seismic Monitoring Instruments," Earthquake Spectra, vol. 30, n. 2, pp. 721-742, 5 2014.

[38] E. Damiano, B. Avolio, A. Minardo, L. Olivares, L. Picarelli and L. Zeni, "A Laboratory Study on the Use of Optical Fibers for Early Detection of Pre-Failure Slope Movements in Shallow Granular Soil Deposits," Geotechnical Testing Journal, vol. 40, n. 4, p. 20160107, 1 7 2017.

[39] K. Bremer, F. Weigand, Y. Zheng, L. Alwis, R. Helbig and B. Roth, "Structural Health Monitoring Using Textile Reinforcement Structures with Integrated Optical Fiber Sensors," Sensors, vol. 17, n. 2, p. 345, 10 2 2017.

[40] R. Bernini, A. Minardo and L. Zeni, "Metodo di ricostruzione del profilo di shift Brillouin in fibra ottica a partire da misure di scattering di Brillouin eseguite nel dominio della frequenza" [Method for reconstructing the Brillouin shift profile in optical fiber beginning with Brillouin scattering measurements carried out in the frequency domain]. 2014.

[41] A. Barrias, J. Casas and S. Villalba, "A Review of Distributed Optical Fiber Sensors for Civil Engineering Applications," Sensors, vol. 16, n. 5, p. 748, 23 5 2016.

[42] X. Bao and L. Chen, "Recent progress in optical fiber sensors based on Brillouin scattering at university of Ottawa," Photonic Sensors, vol. 1, n. 2, pp. 102-117, 19 6 2011.

[43] H. Bao, X. Dong, L.-Y. Shao, C.-L. Zhao, C. C. Chan and P. Shum, "Temperature-Insensitive 2-D Pendulum Clinometer Using Two Fiber Bragg Gratings," IEEE Photonics Technology Letters, vol. 22, n. 12, pp. 863-865, 6 2010.

[44] P. Banerji, S. Chikermane, K. Grattan, S. Tong, F. Surre and R. Scott, "Application of fiber-optic strain sensors for monitoring of a pre-stressed concrete box girder bridge," in 2011 IEEE SENSORS Proceedings, 2011.

[45] N. Avdelidis, D. Almond, A. Dobbinson, B. Hawtin, C. Ibarra-Castanedo and X. Maldague, "Aircraft composites assessment by means of transient thermal NDT," Progress in Aerospace Sciences, vol. 40, n. 3, pp. 143-162, 4 2004.

[46] R. M. Allen, "The Potential for Earthquake Early Warning in Southern California," Science, vol. 300, n. 5620, pp. 786-789, 2 5 2003.

[47] E. Damiano, P. Mercogliano, N. Netti and L. Olivares, "A 'simulation chain' to define a Multidisciplinary Decision Support System for landslide risk management in pyroclastic soils," Natural Hazards and Earth System Sciences, vol. 12, n. 4, pp. 989-1008, 16 4 2012.

[48] Y. Zou, L. Tong and G. Steven, "Vibration-based model-dependent damage (delamination) identification and health monitoring for composite structures - a review," Journal of Sound and Vibration, vol. 230, n. 2, pp. 357-378, 2 2000.

[49] A. Coscetta, A. Minardo, L. Olivares, M. Mirabile, M. Longo, M. Damiano and L. Zeni, "Wind Turbine Blade Monitoring with Brillouin-Based Fiber-Optic Sensors," Journal of Sensors, vol. 2017, pp. 1-5, 2017.

**Claims**

1. Transducer (1) for the detection of strains and/or temperature variations in engineering works and/or terrestrial zones, the transducer (1) comprising at least one distributed optical fiber sensor (2) based on Brillouin scattering and wherein, for at least a part (22) of its longitudinal extension, said optical fiber (2) is housed inside a containment structure (20) which is destined to be associated with the engineering work and/or terrestrial zone of which, and along which, to detect the strains and/or temperature variations, said containment structure (20) comprising an intermediate layer (21) wherein said longitudinal part (22) of optical fiber (2) is completely contained;
**characterized in that** both ends of the optical fiber (2) are located outside the containment structure (20), said containment structure (20) further comprising a pair of coating layers (6, 6') which cover above and below said intermediate layer (21), the mechanical stiffness characteristics of the coating layers (6, 6') and of the optical fiber (2) being substantially the same.

2. Transducer (1) according to claim 1, wherein at least one of said two coating layers (6, 6') is made of glass fiber.

3. Transducer (1) according to one or more of the preceding claims, wherein at least one of said two coating layers (6, 6') is made of unidirectional carbon fiber.

4. Transducer (1) according to one or more of the preceding claims, wherein both of said two coating layers (6, 6') are made of glass fiber.

5. Transducer (1) according to one or more of the preceding claims, wherein both of said two coating layers (6, 6') are made of unidirectional carbon fiber.

6. Transducer (1) according to one or more of the preceding claims, wherein the intermediate layer (21) is made of polymeric material, preferably of polyester resin or of other polymeric material.

7. Transducer (1) according to one or more of the preceding claims, wherein said containment structure (20) is configured to associate said longitudinal part (22) of said optical fiber (2) to the engineering work and/or terrestrial zone of which, and along which, to detect the strains and/or temperature variations.

8. Transducer (1) according to one or more of the preceding claims, wherein said longitudinal part (22) of optical fiber (2) housed in said containment structure (20) has a folded longitudinal extension defining overall substantially a "U" shape.

9. Transducer (1) according to one or more of the preceding claims, wherein the longitudinal extension of said containment structure (20) substantially corresponds to the extension of the portion of the engineering work and/or of the terrestrial zone of which, and along which, to detect the strains and/or temperature variations.

10. Transducer (1) according to one or more of the preceding claims, further comprising at least a fastener (10) for holding together the pair of coating layers (6, 6') by clamping the intermediate layer (21) containing the optical fiber (2).

11. Transducer (1) according to one or more of the preceding claims, the transducer (1) further comprising:

   - at least one first light source configured to emit at least one light radiation inside the optical fiber (2),
   - at least one analysis apparatus for detecting said at least one light radiation which has propagated inside said fiber (2).

12. Origin calibration system comprising:

the transducer (1) according to one or more of the preceding claims, and
a connection device, coupled to the transducer (1) comprising a temperature based origin calibration tool.

13. Early warning system comprising:

an inclinometer pipe consisting of a plurality of cylindrical segments joints together to form a whole cylinder structure, and
at least one transducer according to one or more of the claims 1 to 11 fastened to the cylinder structure along a generatrix of said structure.

14. Method for detecting strains and/or temperature variations in engineering works and/or terrestrial zones employing the transducer (1) according to one or more of the claims 1 to 11, the method comprising:

coupling a first end of the optical fiber (2) with a first light source;
measuring the energy of the photons associated to the first light source exiting the optical fiber (2); and
determining information obtained on the vibrations occurring inside the optical fiber (2) itself or that are transmitted to it.

15. Method according to claim 14, further comprising:
coupling a second end of the optical fiber (2) with a second light source, wherein the first light source emits pulsed light and the second light source emits continuous light.


**Patentansprüche**

1. Wandler (1) zur Erfassung von Dehnungen und/oder Temperaturschwankungen in Ingenieurbauwerken und/oder Erdbereichen, wobei der Wandler (1) wenigstens einen verteilten Lichtleitfaser-Sensor (2) auf der Basis von Brillouin-Streuung umfasst und wobei die Lichtleitfaser (2) über wenigstens einen Teil (22) ihrer Längserstreckung im Inneren einer Einschließungsstruktur (20) untergebracht ist, die dazu bestimmt ist, mit dem Ingenieurbauwerk und/oder dem Erdbereich verbunden zu werden, dessen und entlang dem die Dehnungen und/oder Temperaturschwankungen erfasst werden sollen, wobei die Einschließungsstruktur (20) eine Zwischenschicht (21) umfasst, in welcher der Längsteil (22) der Lichtleitfaser (2) vollständig eingeschlossen ist;
**dadurch gekennzeichnet, dass** beide Enden der Lichtleitfaser (2) außerhalb der Einschließungsstruktur (20) angeordnet sind, wobei die Einschließungsstruktur (20) ferner ein Paar von Überzugsschichten (6, 6') umfasst, welche die Zwischenschicht (21) oben und unten bedecken, wobei die mechanischen Steifigkeitseigenschaften der Überzugsschichten (6, 6') und der Lichtleitfaser (2) im Wesentlichen gleich sind.

2. Wandler (1) nach Anspruch 1, wobei wenigstens eine der zwei Überzugsschichten (6, 6') aus Glasfaser hergestellt ist.

3. Wandler (1) nach einem oder mehreren der vorhergehenden Ansprüche, wobei wenigstens eine der zwei Überzugsschichten (6, 6') aus unidirektionaler Kohlenstofffaser hergestellt ist.

4. Wandler (1) nach einem oder mehreren der vorhergehenden Ansprüche, wobei beide der zwei Überzugsschichten (6, 6') aus Glasfaser hergestellt sind.

5. Wandler (1) nach einem oder mehreren der vorhergehenden Ansprüche, wobei beide der zwei Überzugsschichten (6, 6') aus unidirektionaler Kohlenstofffaser hergestellt sind.

6. Wandler (1) nach einem oder mehreren der vorhergehenden Ansprüche, wobei die Zwischenschicht (21) aus polymerem Material, vorzugsweise aus Polyesterharz oder einem anderen polymeren Material, hergestellt ist.

7. Wandler (1) nach einem oder mehreren der vorhergehenden Ansprüche, wobei die Einschließungsstruktur (20) dafür eingerichtet ist, den Längsteil (22) der Lichtleitfaser (2) mit dem Ingenieurbauwerk und/oder Erdbereich zu verbinden, dessen und entlang dem die Dehnungen und/oder Temperaturschwankungen erfasst werden sollen.

8. Wandler (1) nach einem oder mehreren der vorhergehenden Ansprüche, wobei der in der Einschließungsstruktur (20) untergebrachte Längsteil (22) der Lichtleitfaser (2) eine gefaltete Längserstreckung aufweist, die insgesamt im Wesentlichen eine "U"-Form definiert.

9. Wandler (1) nach einem oder mehreren der vorhergehenden Ansprüche, wobei die Längserstreckung der Einschließungsstruktur (20) im Wesentlichen der Erstreckung des Abschnitts des Ingenieurbauwerks und/oder Erdbereichs entspricht, dessen und entlang dem die Dehnungen und/oder Temperaturschwankungen erfasst werden sollen.

10. Wandler (1) nach einem oder mehreren der vorhergehenden Ansprüche, ferner umfassend wenigstens ein Befestigungselement (10) zum Zusammenhalten des Paares von Überzugsschichten (6, 6') durch Einklemmen der Zwischenschicht (21), welche die Lichtleitfaser (2) enthält.

11. Wandler (1) nach einem oder mehreren der vorhergehenden Ansprüche, wobei der Wandler (1) ferner umfasst:

   - wenigstens eine erste Lichtquelle, die dafür eingerichtet ist, wenigstens eine Lichtstrahlung im Inneren der Lichtleitfaser (2) auszusenden,
   - wenigstens eine Analysevorrichtung zum Erfassen der wenigstens einen Lichtstrahlung, die sich in der Faser (2) ausgebreitet hat.

12. Ursprungskalibrierungssystem, umfassend:

   den Wandler (1) nach einem oder mehreren der vorhergehenden Ansprüche, und
   eine mit dem Wandler (1) verbundene Verbindungsvorrichtung, umfassend ein temperaturbasiertes Ursprungskalibrierungswerkzeug.

13. Frühwarnsystem, umfassend:
   ein Neigungsmessrohr, bestehend aus einer Vielzahl von zylindrischen Segmenten, die miteinander verbunden sind, um eine ganze Zylinderstruktur zu bilden, und wenigstens einen Wandler nach einem oder mehreren der Ansprüche 1 bis 11, der entlang einer Mantellinie der Struktur an der Zylinderstruktur befestigt ist.

14. Verfahren zum Erfassen von Dehnungen und/oder Temperaturschwankungen in Ingenieurbauwerken und/oder Erdbereichen unter Verwendung des Wandlers (1) nach einem oder mehreren der Ansprüche 1 bis 11, wobei das Verfahren umfasst:

   Koppeln eines ersten Endes der Lichtleitfaser (2) mit einer ersten Lichtquelle;
   Messen der Energie der mit der ersten Lichtquelle assoziierten Photonen, die aus der Lichtleitfaser (2) austreten; und
   Bestimmen der erhaltenen Informationen über die Schwingungen, die in der Lichtleitfaser (2) selbst auftreten oder die auf sie übertragen werden.

15. Verfahren nach Anspruch 14, ferner umfassend:
   Koppeln eines zweiten Endes der Lichtleitfaser (2) mit einer zweiten Lichtquelle, wobei die erste Lichtquelle gepulstes Licht aussendet und die zweite Lichtquelle kontinuierliches Licht aussendet.

**Revendications**

1. Transducteur (1) pour la détection de contraintes et/ou de variations de température dans des ouvrages d'art et/ou des zones terrestres, le transducteur (1) comprenant au moins un capteur à fibre optique distribuée (2) basé sur la diffusion Brillouin et dans lequel, pour au moins une partie (22) de son extension longitudinale, ladite fibre optique (2) est logée à l'intérieur d'une structure de confinement (20) qui est destinée à être associée à l'ouvrage d'art et/ou à la zone terrestre sur lequel, et le long duquel, doivent être détectées les contraintes et/ou les variations de température, ladite structure de confinement (20) comprenant une couche intermédiaire (21) dans lequel ladite partie longitudinale (22) de la fibre optique (2) est complètement confinée ;
   **caractérisé en ce que** les deux extrémités de la fibre optique (2) sont situées à l'extérieur de la structure de confinement (20), ladite structure de confinement (20) comprenant en outre une paire de couches de revêtement (6, 6') qui recouvrent par le dessus et par le dessous ladite couche intermédiaire (21), les caractéristiques de rigidité mécanique des couches de revêtement (6, 6') et de la fibre optique (2) étant sensiblement les mêmes.

**2.** Transducteur (1) selon la revendication 1, dans lequel au moins l'une desdites deux couches de revêtement (6, 6') est constituée de fibre de verre.

**3.** Transducteur (1) selon une ou plusieurs des revendications précédentes, dans lequel au moins l'une desdites deux couches de revêtement (6, 6') est constituée de fibre de carbone unidirectionnelle.

**4.** Transducteur (1) selon une ou plusieurs des revendications précédentes, dans lequel lesdites deux couches de revêtement (6, 6') sont toutes deux constituées de fibre de verre.

**5.** Transducteur (1) selon une ou plusieurs des revendications précédentes, dans lequel lesdites deux couches de revêtement (6, 6') sont toutes deux constituées de fibre de carbone unidirectionnelle.

**6.** Transducteur (1) selon une ou plusieurs des revendications précédentes, dans lequel la couche intermédiaire (21) est constituée d'un matériau polymère, de préférence d'une résine de polyester ou d'un autre matériau polymère.

**7.** Transducteur (1) selon une ou plusieurs des revendications précédentes, dans lequel ladite structure de confinement (20) est configurée pour associer ladite partie longitudinale (22) de ladite fibre optique (2) à l'ouvrage d'art et/ou à la zone terrestre sur lequel, et le long duquel, doivent être détectées les contraintes et/ou les variations de température.

**8.** Transducteur (1) selon une ou plusieurs des revendications précédentes, dans lequel ladite partie longitudinale (22) de la fibre optique (2) logée dans ladite structure de confinement (20) comporte une extension longitudinale pliée présentant généralement une forme sensiblement en « U ».

**9.** Transducteur (1) selon une ou plusieurs des revendications précédentes, dans lequel l'extension longitudinale de ladite structure de confinement (20) correspond sensiblement à l'extension de la portion de l'ouvrage d'art et/ou de la zone terrestre sur lequel, et le long duquel, doivent être détectées les contraintes et/ou les variations de température.

**10.** Transducteur (1) selon une ou plusieurs des revendications précédentes, comprenant en outre au moins une fixation (10) pour maintenir ensemble la paire de couches de revêtement (6, 6') en serrant la couche intermédiaire (21) contenant la fibre optique (2).

**11.** Transducteur (1) selon une ou plusieurs des revendications précédentes, le transducteur (1) comprenant en outre :

- au moins une première source lumineuse configurée pour émettre au moins un rayonnement lumineux à l'intérieur de la fibre optique (2),
- au moins un appareil d'analyse pour détecter ledit au moins un rayonnement lumineux qui est propagé à l'intérieur de ladite fibre (2).

**12.** Système d'étalonnage d'origine comprenant :

le transducteur (1) selon une ou plusieurs des revendications précédentes, et
un dispositif de connexion, couplé au transducteur (1) comprenant un outil d'étalonnage d'origine basé sur la température.

**13.** Système d'alerte précoce comprenant :

un tuyau d'inclinomètre constitué d'une pluralité de segments cylindriques assemblés pour former une structure cylindrique complète, et
au moins un transducteur selon une ou plusieurs des revendications 1 à 11 fixé à la structure cylindrique le long d'une génératrice de ladite structure.

**14.** Procédé de détection de contraintes et/ou de variations de température dans des ouvrages d'art et/ou des zones terrestres utilisant le transducteur (1) selon une ou plusieurs des revendications 1 à 11, le procédé comprenant :

le couplage d'une première extrémité de la fibre optique (2) à une première source lumineuse ;
la mesure de l'énergie des photons associés à la première source lumineuse sortant de la fibre optique (2) ; et

la détermination d'information obtenue sur les vibrations se produisant à l'intérieur de la fibre optique (2) elle-même ou qui lui sont transmises.

15. Procédé selon la revendication 14, comprenant en outre :
le couplage d'une deuxième extrémité de la fibre optique (2) à une deuxième source lumineuse, dans lequel la première source lumineuse émet une lumière pulsée et la deuxième source lumineuse émet une lumière continue.

FIG. 1

FIG. 2

FIG. 3

FIG. 4

FIG. 5

FIG. 6

FIG. 7

FIG. 8

FIG. 9

18

a)                                                 b)

FIG. 10

FIG. 11

FIG. 12

EP 3 948 167 B1

FIG. 13

250 mm    7250 mm

7500 m

GG Transducer

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019016065 A1

**Non-patent literature cited in the description**

- **H.-H. ZHU ; B. SHI ; J. ZHANG ; J.-F. YAN ; C.-C. ZHANG.** Distributed fiber optic monitoring and stability analysis of a model slope under surcharge loading. *Journal of Mountain Science,* 10 July 2014, vol. 11 (4), 979-989
- **L. ZENI ; L. PICARELLI ; B. AVOLIO ; A. COSCETTA ; R. PAPA ; G. ZENI ; C. DI MAIO ; R. VASSALLO ; A. MINARDO.** Brillouin optical time-domain analysis for geotechnical monitoring. *Journal of Rock Mechanics and Geotechnical Engineering,* August 2015, vol. 7 (4), 458-462
- **P. S. WESTBROOK ; T. KREMP ; K. S. FEDER ; W. KO ; E. M. MONBERG ; H. WU ; D. A. SIMOFF ; T. F. TAUNAY ; R. M. ORTIZ.** Continuous Multicore Optical Fiber Grating Arrays for Distributed Sensing Applications. *Journal of Lightwave Technology,* 15 March 2017, vol. 35 (6), 1248-1252
- **Y. WANG ; B. JIN ; Y. WANG ; D. WANG ; X. LIU ; Q. DONG.** Distributed fiber-optic vibration detection system. *2016 13th International Conference on Ubiquitous Robots and Ambient Intelligence (URAI),* 2016
- **G. UVA ; F. PORCO ; A. FIORE ; G. PORCO.** Structural monitoring using fiber optic sensors of a pre-stressed concrete viaduct during construction phases. *Case Studies in Nondestructive Testing and Evaluation,* October 2014, vol. 2, 27-37
- **R. USAMENTIAGA ; P. VENEGAS ; J. GUEREDIAGA ; L. VEGA ; I. LÓPEZ.** Automatic detection of impact damage in carbon fiber composites using active thermography. *Infrared Physics & Technology,* May 2013, vol. 58, 36-46
- **I. TRENDAFILOVA ; M. CARTMELL ; W. OSTACHOWICZ.** Vibration-based damage detection in an aircraft wing scaled model using principal component analysis and pattern recognition. *Journal of Sound and Vibration,* June 2008, vol. 313 (3-5), 560-566
- **Y. STERN ; Y. LONDON ; E. PREFER ; Y. ANTMAN ; H. DIAMANDI ; M. SILBIGER ; G. ADLER ; E. LEVENBERG ; D. SHALEV ; A. ZADOK.** Brillouin Optical Correlation Domain Analysis in Composite Material Beams. *Sensors,* 02 October 2017, vol. 17 (10), 2266
- **K. SMARSLY ; K. LEHNER ; D. HARTMANN.** Structural Health Monitoring based on Artificial Intelligence Techniques. *Computing in Civil Engineering (2007), Reston, VA,* 2007
- **B. SHI ; H. SUI ; J. LIU ; D. ZHANG.** The BOTDR-based distributed monitoring system for slope engineering. *IAEG 2006, Nottingham, UK,* 2006
- **L. SCHENATO ; L. PALMIERI ; M. CAMPORESE ; S. BERSAN ; S. COLA ; A. PASUTO ; A. GALTAROSSA ; P. SALANDIN ; P. SIMONINI.** Distributed optical fiber sensing for early detection of shallow landslides triggering. *Scientific Reports,* 31 December 2017, vol. 7 (1), 14686
- **E. RUOCCO ; V. MINUTOLO.** Buckling Analysis of Mindlin Plates Under the Green-Lagrange Strain Hypothesis. *International Journal of Structural Stability and Dynamics,* August 2015, vol. 15 (06), 1450079
- **G. RODRIGUEZ ; J. R. CASAS ; S. VILLABA.** Cracking assessment in concrete structures by distributed optical fiber. *Smart Materials and Structures,* 01 March 2015, vol. 24 (3), 035005
- **J. REILLY ; S. DASHTI ; M. ERVASTI ; J. D. BRAY ; S. D. GLASER ; A. M. BAYEN.** Mobile Phones as Seismologic Sensors: Automating Data Extraction for the iShake System. *IEEE Transactions on Automation Science and Engineering,* April 2013, vol. 10 (2), 242-251
- **C. RATCLIFFE ; D. HEIDER ; R. CRANE ; C. KRAUTHAUSER ; M. K. YOON ; J. W. GILLESPIE.** Investigation into the use of low cost MEMS accelerometers for vibration based damage detection. *Composite Structures,* 2008
- **U. POLIMENO ; M. MEO.** Detecting barely visible impact damage detection on aircraft composites structures. *Composite Structures,* December 2009, vol. 91 (4), 398-402
- **H. PEI ; P. CUI ; J. YIN ; H. ZHU ; X. CHEN ; L. PEI ; D. XU.** Monitoring and warning of landslides and debris flows using an optical fiber sensor technology. *Journal of Mountain Science,* 17 October 2011, vol. 8 (5), 728-738

- **H. PEI ; J. YIN ; H. ZHU ; C. HONG.** Development and Application of an Optical Fiber Sensor Based In-Place Inclinometer for Geotechnical Monitoring. *Geo-Frontiers 2011, Reston, VA,* 2011
- Apparato per la misura di profilo di shift brillouin in fibra ottica basato sull'acquisizione in tempo reale del segnale differenziale'' [Apparatus for measuring the Brillouin shift profile in optical fiber based on the real-time acquisition of the differential signal. *Optosensing,* 2016
- **L. OLIVARES ; E. DAMIANO ; P. MERCOGLIANO ; L. PICARELLI ; N. NETTI ; P. SCHIANO ; V. SAVASTANO ; F. COTRONEO ; M. P. MANZI.** A simulation chain for early prediction of rainfall-induced landslides. *Landslides,* 26 October 2014, vol. 11 (5), 765-777
- **F. MOSER ; W. LIENHART ; H. WOSCHITZ ; H. SCHULLER.** Long-term monitoring of reinforced earth structures using distributed fiber optic sensing. *Journal of Civil Structural Health Monitoring,* 04 July 2016, vol. 6 (3), 321-327
- **T. LOUTAS ; A. PANOPOULOU ; D. ROULIAS ; V. KOSTOPOULOS.** Intelligent health monitoring of aerospace composite structures based on dynamic strain measurements. *Expert Systems with Applications,* July 2012, vol. 39 (9), 8412-8422
- **K. M. LEE ; V. R. MANJUNATH.** Experimental and numerical studies of geosynthetic-reinforced sand slopes loaded with a footing. *Canadian Geotechnical Journal,* August 2000, vol. 37 (4), 828-842
- **D. KOTSAKOS ; P. SAKKOS ; V. KALOGERAKI ; D. GUNOPULOS.** Smartmonitor: Using smart devices to perform structural health monitoring. *Proceedings of the VLDB Endowment,* 28 August 2013, vol. 6 (12), 1282-1285
- **Q. KONG ; R. M. ALLEN ; M. D. KOHLER ; T. H. HEATON ; J. BUNN.** Structural Health Monitoring of Buildings Using Smartphone Sensors. *Seismological Research Letters,* 10 March 2018, vol. 89 (2A), 594-602
- **A. KATUNIN ; K. DRAGAN ; M. DZIENDZIKOWSKI.** Damage identification in aircraft composite structures: A case study using various non-destructive testing techniques. *Composite Structures,* September 2015, vol. 127, 1-9
- **M. ITEN ; A. M. PUZRIN.** *BOTDA road-embedded strain sensing system for landslide boundary localization,* 2009
- **X. HUANG ; M. YANG ; L. FENG ; H. GU ; H. SU ; X. CUI ; W. CAO.** Crack detection study for hydraulic concrete using PPP-BOTDA. *Smart Structures and Systems,* 2017, vol. 20 (1), 75-83
- **C.-Y. HONG ; J.-H. YIN ; Y.-F. ZHANG.** Deformation monitoring of long GFRP bar soil nails using distributed optical fiber sensing technology. *Smart Materials and Structures,* 01 August 2016, vol. 25 (8), 085044
- **C. GUO ; D. CHEN ; C. SHEN ; Y. LU ; H. LIU.** Optical inclinometer based on a tilted fiber Bragg grating with a fused taper. *Optical Fiber Technology,* August 2015, vol. 24, 30-33
- **P. GAO.** The Application of Distributed Optical Fiber Sensing in Seepage Flow Monitoring System. *International Journal of Digital Content Technology and its Applications,* 15 July 2012, vol. 6 (12), 175-181
- **I. FLORIS ; S. SALES ; P. A. CALDERÓN ; J. M. ADAM.** Measurement uncertainty of multicore optical fiber sensors used to sense curvature and bending direction. *Measurement,* January 2019, vol. 132, 35-46
- **M. FARHADIROUSHAN ; S. JOHANSSON.** Seepage and strain monitoring in embankment dams using distributed sensing in optical fibers-theoretical background and experiences from some installations in Sweden. *International Symposium on Dam Safety and Detection of Hidden Troubles, Xi'an, China,* 2005
- **M. FAJKUS ; J. NEDOMA ; P. MEC ; E. HRUBESOVA ; R. MARTINEK ; V. VASINEK.** Analysis of the highway tunnels monitoring using an optical fiber implemented into primary lining. *Journal of Electrical Engineering,* 01 September 2017, vol. 68 (5), 364-370
- **P. DRAGIC ; J. BALLATO.** A Brief Review of Specialty Optical Fibers for Brillouin-Scattering-Based Distributed Sensors. *Applied Sciences,* 20 October 2018, vol. 8 (10), 1996
- **S. DASHTI ; J. D. BRAY ; J. REILLY ; S. GLASER ; A. BAYEN ; E. MARI.** Evaluating the Reliability of Phones as Seismic Monitoring Instruments. *Earthquake Spectra,* May 2014, vol. 30 (2), 721-742
- **E. DAMIANO ; B. AVOLIO ; A. MINARDO ; L. OLIVARES ; L. PICARELLI ; L. ZENI.** A Laboratory Study on the Use of Optical Fibers for Early Detection of Pre-Failure Slope Movements in Shallow Granular Soil Deposits. *Geotechnical Testing Journal,* 01 July 2017, vol. 40 (4), 20160107
- **K. BREMER ; F. WEIGAND ; Y. ZHENG ; L. ALWIS ; R. HELBIG ; B. ROTH.** Structural Health Monitoring Using Textile Reinforcement Structures with Integrated Optical Fiber Sensors. *Sensors,* 10 February 2017, vol. 17 (2), 345
- **R. BERNINI ; A. MINARDO ; L. ZENI.** *Metodo di ricostruzione del profilo di shift Brillouin in fibra ottica a partire da misure di scattering di Brillouin eseguite nel dominio della frequenza'' [Method for reconstructing the Brillouin shift profile in optical fiber beginning with Brillouin scattering measurements carried out in the frequency domain,* 2014
- **A. BARRIAS ; J. CASAS ; S. VILLALBA.** A Review of Distributed Optical Fiber Sensors for Civil Engineering Applications. *Sensors,* 23 May 2016, vol. 16 (5), 748

- **X. BAO ; L. CHEN.** Recent progress in optical fiber sensors based on Brillouin scattering at university of Ottawa. *Photonic Sensors,* 19 June 2011, vol. 1 (2), 102-117
- **H. BAO ; X. DONG ; L.-Y. SHAO ; C.-L. ZHAO ; C. C. CHAN ; P. SHUM.** Temperature-Insensitive 2-D Pendulum Clinometer Using Two Fiber Bragg Gratings. *IEEE Photonics Technology Letters,* June 2010, vol. 22 (12), 863-865
- **P. BANERJI ; S. CHIKERMANE ; K. GRATTAN ; S. TONG ; F. SURRE ; R. SCOTT.** Application of fiber-optic strain sensors for monitoring of a pre-stressed concrete box girder bridge. *2011 IEEE SENSORS Proceedings,* 2011
- **N. AVDELIDIS ; D. ALMOND ; A. DOBBINSON ; B. HAWTIN ; C. IBARRA-CASTANEDO ; X. MALDAGUE.** Aircraft composites assessment by means of transient thermal NDT. *Progress in Aerospace Sciences,* April 2004, vol. 40 (3), 143-162
- **R. M. ALLEN.** The Potential for Earthquake Early Warning in Southern California. *Science,* 02 May 2003, vol. 300 (5620), 786-789
- **E. DAMIANO ; P. MERCOGLIANO ; N. NETTI ; L. OLIVARES.** A 'simulation chain' to define a Multidisciplinary Decision Support System for landslide risk management in pyroclastic soils. *Natural Hazards and Earth System Sciences,* vol. 12 (4), 989-1008
- **Y. ZOU ; L. TONG ; G. STEVEN.** Vibration-based model-dependent damage (delamination) identification and health monitoring for composite structures - a review. *Journal of Sound and Vibration,* February 2000, vol. 230 (2), 357-378
- **A. COSCETTA ; A. MINARDO ; L. OLIVARES ; M. MIRABILE ; M. LONGO ; M. DAMIANO ; L. ZENI.** Wind Turbine Blade Monitoring with Brillouin-Based Fiber-Optic Sensors. *Journal of Sensors,* 2017, vol. 2017, 1-5